# EUROPEAN PATENT SPECIFICATION

(11) **EP 2 243 588 B1**
(45) Date of publication and mention of the grant of the patent: **16.11.2011**
(21) Application number: 10157156.0
(22) Date of filing: 22.03.2010
(51) Int. Cl.: B23K 28/00

(54) **Automatic welding group of a film for shrink packers and relative method**
Automatenschweißgruppe einer Folie für Schrumpfverpacker und zugehöriges Verfahren
Groupe de soudage automatique d'un film pour emballeuses sous film thermorétractable et procédé correspondant

(30) Priority: 10.04.2009 IT MI20090592
(43) Date of publication of application: 27.10.2010
(73) Proprietor: OCME S.r.l., 43122 Parma (PR) (IT)
(72) Inventor: Gatteschi, Emanuele, 43121 Parma PR (IT)
(74) Representative: Branca, Emanuela

(56) References cited:
- EP-A- 0 597 550
- EP-A- 0 974 541
- EP-A- 1 600 412

## Description

The present invention refers to an automatic welding group of a film for shrink packers and to a relative method.

Automatic welders are known to be used for welding the film of two reels, the one that has run out and the new one, in an opposing manner, that is to say by matching the front and back sides of the two films, respectively.

It is also known for complicated automatic welding systems to be used for welding the working film of the empty reel to the new one side by side with each other, i.e. back to back or front to front.

This last approach has the advantage of drastically reducing the length of the excess ends around the welding and of allowing an easy removal of the portion of new film which has not been used, welding it to the finished reel. Moreover, it allows reels of film printed on one side to be connected to one another.

Known side by side welding systems are **characterised in that** they use mobile positioners, for example that can translate or rotate, which indeed turn the two films with the right sides facing each other so as to arrange them for the welding.

For example, according to some systems, the initial end of the new film is kept constrained to a fixed clamp and the translating positioner brings a surface of the film near to the welding area, and in particular facing a welding bar. The translating positioner device also acts as a welding counterbar.

According to other systems, on the other hand, the free end of the new film is directly held by a rotating positioner, which is stably hinged near to the welding area, facing a welding bar. Also in this case the rotating positioner device also acts as a welding counterbar.

The presence of mobile positioners causes there to be substantial constructive complications in making the welding device. Moreover, if the manual mounting of the initial end of the new film is directly carried out in the welding area, there is a complication and a slowing down of the welding procedure as well.

The purpose of the present invention is that of making an automatic welding group of a film for shrink packers and a relative method in which during the welding operations the number of mobile components is minimised.

Another purpose of the present invention is that of making an automatic welding group of a film for shrink packers and a relative method which simplifies the application of the new reel to the group.

Another purpose of the present invention is that of making an automatic welding group of a film for shrink packers and a relative method which is particularly simple and functional, with low costs.

These purposes according to the present invention are achieved by making an automatic welding group of a film for shrink packers as outlined in claim 1.

Further characteristics of the automatic welding group of a film for shrink packers and of the relative method are foreseen in the dependent claims.

The characteristics and the advantages of an automatic welding group of a film for shrink packers and a relative method according to the present invention shall become clearer from the following description, given as an example and not for limiting purposes, referring to the attached schematic drawings, in which:
figure 1 schematically shows a partial section of the automatic welding group of a film for shrink packers, whilst being fed with a film by a first reel;
figure 2 is a schematic side view partially in section of the group of figure 1;
figure 3 is an enlarged and interrupted view of the locking clamp of the welding group according to the invention; figures from 4 to 9 schematically show the steps of the method of automatically welding of a film for shrink packers according to the invention.

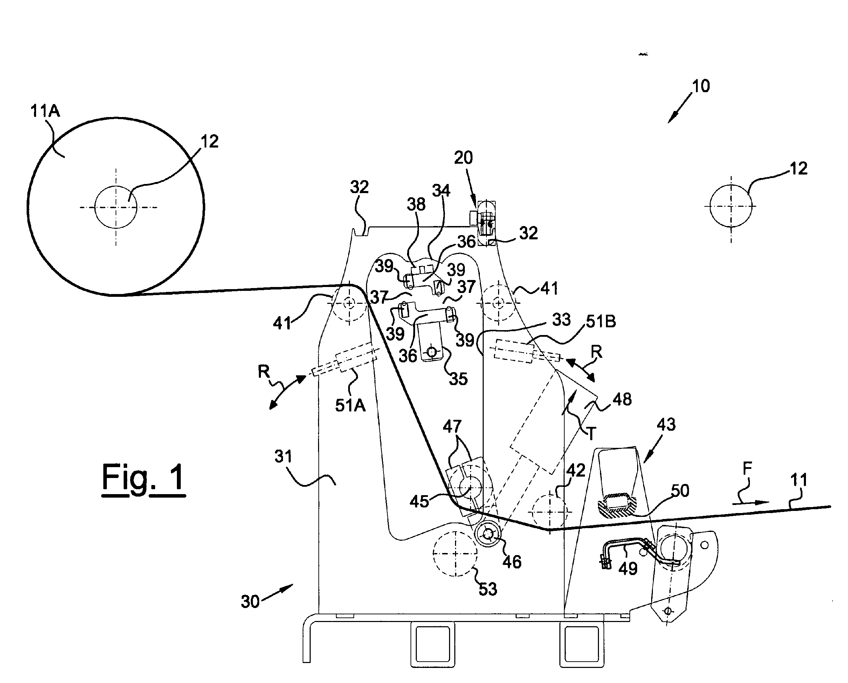

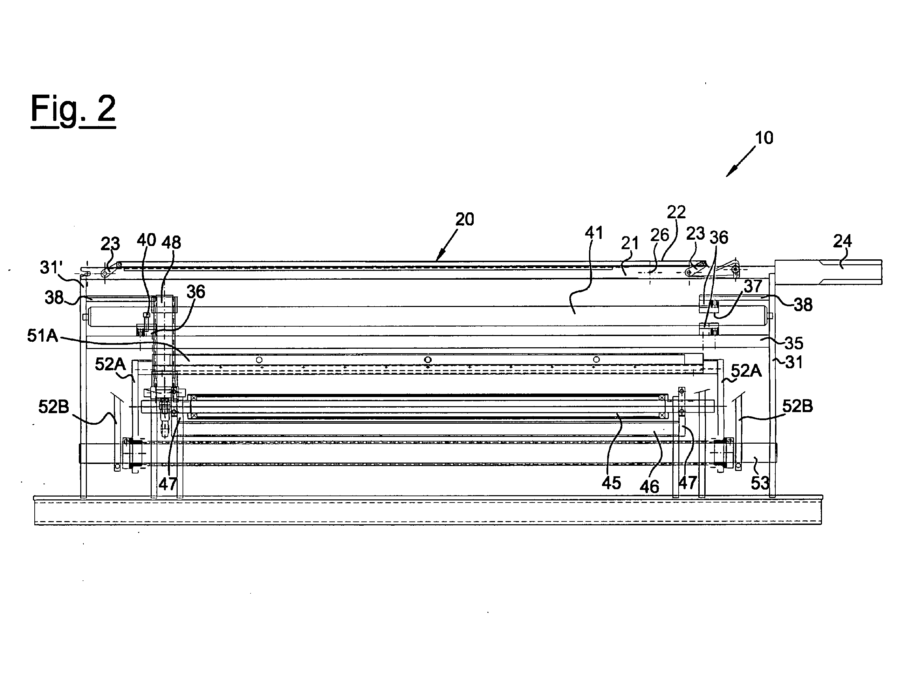

With reference to figures 1 and 2, an automatic welding group of a film for shrink packers is wholly shown with reference numeral 10, comprising two unwinding supports 12 each for one reel of film 11, a welding device 30 for side by side welding a portion of film of a reel that is running out 11A with a portion of film of a new reel 11B, and a locking clamp 20 of an initial end 111B of the film of the new reel.

The unwinding supports 12, only shown schematically, are for example made up of a known type of pneumatic expansion reel holding pin.

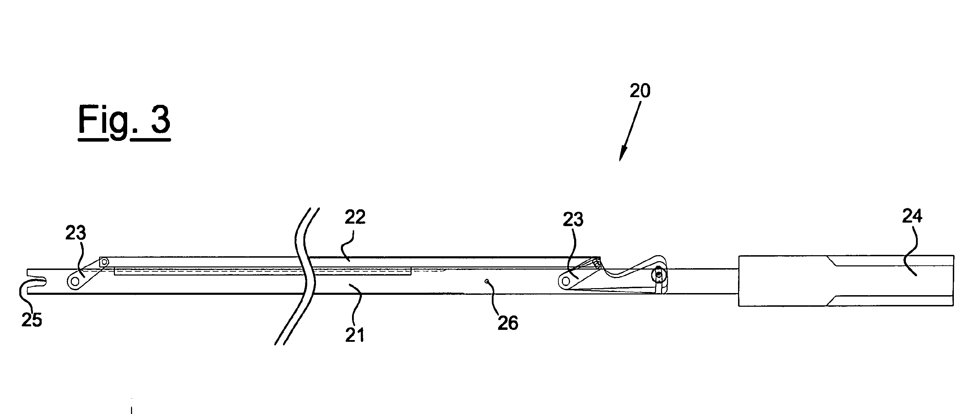

The locking clamp 20, shown enlarged in figure 3, constitutes a separate and free movable element with respect to the welding device 30. The clamp 20 comprises a transversal bar 21 and a matching counterbar 22, joined to the transversal bar 21, at its ends, through levers 23, which form an articulated parallelogram to clamp the initial end 111B of the film of the new reel 11B.

The transversal bar 21 and the matching counterbar 22 can be articulated with respect to each other to clamp the initial end 111B thus fastening the transversal bar 21 and the matching counterbar 22 to only one end even in another way, for example through a fulcrum connection.

At one end, the clamp 20 also comprises a handle 24 and at the other end it has a seat 25, in the example having a "V"-shape configuration, for the axial positioning on the welding device 30.

On opposite sides and near to the end bearing the handle 24, the clamp also comprises two centring seats 26, one on each side, for the positioning on the welding device 30, said seats in the example being made up of conical holes made in the transversal bar 21 on opposite sides.

The welding device 30, positioned in an area comprised between the two unwinding supports of the reels 12 and transversally with respect to the feeding direction of the film towards a shrink packer, said direction being indicated in figure 1 with the arrow F, comprises two lateral sidewalls 31 and 31' positioned at a distance which is greater than the maximum width of the film.

Each sidewall 31, 31' comprises at least one temporary seat 32 for the locking clamp 20, suitable for housing it during operations of insertion of the initial end 111B of the film of the new reel 11B, on the upper edge.

According to the preferred embodiment of the welding group 10 according to the invention two temporary seats 32 are foreseen, each facing towards the relative unwinding support 12 of the reels 11A and 11B.

At least one of the sidewalls, in particular the sidewall 31 facing towards the operator side, comprises an opening 33 which allows the operator to insert the clamp 20, already constrained to the initial end 111B of the new reel 11B, inside the welding device 30 and to monitor the welding steps.

The open sidewall 31 comprises, in the upper portion of the opening 33, an extension 34 of the sidewall for mounting a fixed welding counterbar 35, which extends between the sidewalls 31, 31'.

The opposite sidewall 31' can be the same as the open sidewall 31 or it can consist of a closed plate.

In the preferred embodiment, in which the sidewalls 31, 31' are identical, the welding device 30 according to the invention can be adapted for right handed or left handed use. This means that, with respect to the feeding direction towards the shrink packer, the operator side can be any one of the two sidewalls 31, 31'.

Moreover, for the sake of simplicity, the pneumatic and mechanical actuators of the welding device 30 are arranged on the opposite side with respect to the operator.

The welding device 30 also comprises a pair of centring supports 36, fixedly constrained to the sidewall on the operator side 31, which cooperate to form two opposite seats 37, above the welding counterbar 35, for positioning the clamp 20 in the machine.

Indeed, during welding, the clamp 20 is arranged in that seat 37 which is opposite with respect to the new reel 11B.

In the shown example embodiment, the upper centring support 36 is fixedly connected to a beam 38 which extends perpendicularly from the sidewall on the operator side 31 for a short portion towards the opposite sidewall 31'. The lower centring support 36, on the other hand, is connected to the welding counterbar 35 (figure 2).

Each support 36 is equipped at each end with a presser 39, which constitutes an element that matches the centring seats 26 of the clamp 20. The presser 39 comprises a feeler element pushed by a spring, suitable for engaging with the centring seat 26 or on the flat surface of the clamp 20.

It is however important for the top and bottom pressers 39 of each seat 37 to be out of alignment with respect to one another in order to avoid both the centring seats 26 at the opposite sides of the clamp 20 simultaneously coupling with the pressers 39, since this would make the fixing unstable and the extraction of the clamp 20 from the seat 37 difficult.

The opposite sidewall 31' of the welding device 30, on the other hand, comprises means for the axial positioning of the clamp, for example consisting of just the lower centring support 36 to which axial abutment means are applied, which match the "V"-shaped seat 25 of the clamp 20, in the example said means being made up of two screws 40, one for each position of the clamp 20, partially screwed into the lower support 36 and on which, in the two respective positions, the "V"-shaped seat 25 of the clamp 20 is inserted.

Each sidewall also comprises two upper idler rolls 41, each for the film coming from the relative reel, and a lower idler roll 42 placed upstream of a brake 43 on the outlet line of the film 11 from the welding device in direction F. Moreover, tightening means 44 of the film are foreseen placed between the welding area and the lower idler roll 42.

The tightening means 44 comprise a fixed axis idler roll 45, for example fixedly connected to the sidewalls 31, 31' and an idler bar 46, that are parallel to one another and joined together at their ends through connection flanges 47 divided into two parts. The idler roll 45 and the idler bar 46 define a channel for the passage of the film 11 between them.

On the side opposite the operator, the idler bar 46 is also connected to a linear actuator 48, for example a piston schematically shown in figure 1, suitable for moving the idler bar 46, in the direction of the arrow T, to extend the path of the film 11 between the tightening means and to check the welding.

Indeed, if the welding is correct, the film, placed in tension by the movement of the idler bar 46, prevents the linear actuator 48 from reaching an end stop position.

The brake 43, on the other hand, comprises a mobile buffer 49 associated with a fixed abutment element 50, between which the film is passed through.

The device also comprises two mobile welding bars 51A and 51B, facing onto opposite sides of the counterbar 35 in a portion comprised between the pair of supports 36 of the clamp 20 and the axial positioning means, in the example made up of the lower support 36 and the screws 40.

The mobile welding bars 51A, 51B are equipped with independent actuator means, not shown, which bring them into contact with the counterbar 35. In the example the welding bar 51A is connected through lateral flanges 52A to a torsion bar 53 and describes an arc of a circle, schematised with the double arrow R in figure 1. The welding bar 51B is connected through lateral flanges 52B to a pin coaxial to the torsion bar 53 and it describes an arc of a circle, schematised with the double arrow R in figure 1.

A linear movement coming closer to the counterbar 35 is also possible according to the invention.

The welding bars 35 are also provided with nozzles, not shown, for emitting a jet of cooling air at the end of the welding.

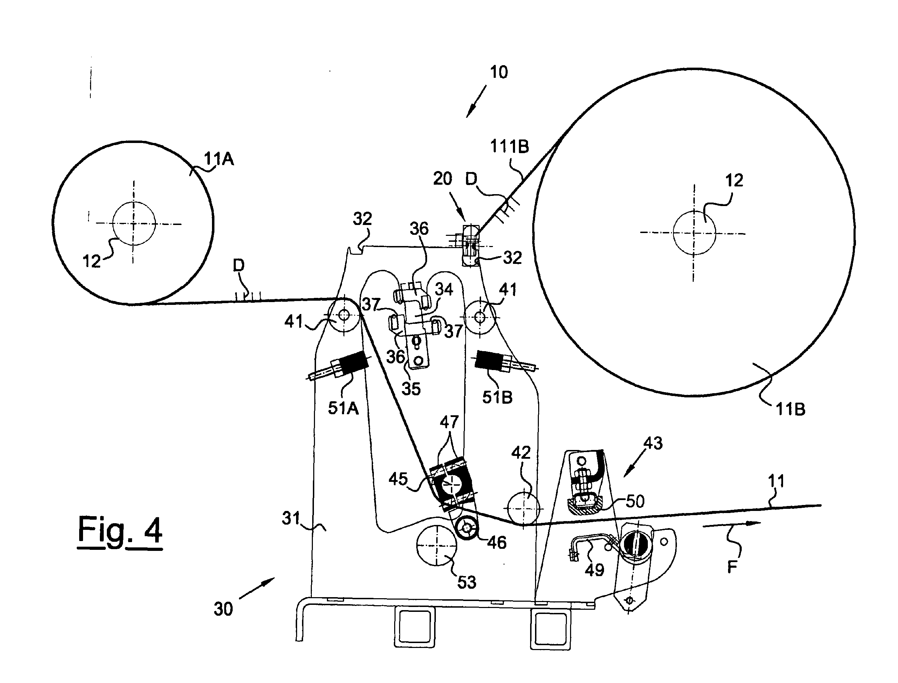

The operation steps of the welding group 10 according to the invention are schematically shown in figures 4 to 9.

Figure 1 shows the feeding of the film 11 of the single reel 11A through the welding group 10 in the direction F towards a shrink packer machine, not shown. In particular the film 11 coming from the reel 11A is sent back on the relative upper idler roll 41 and on the idler roll 45 of the tightening means 44, it is inserted between such an idler roll 45 and the idler bar 46, it is sent back on the lower idler roll 42 and it passes through the brake 43, which is in its open position.

In the condition of figure 4, the operator has fixed the locking clamp 20 to the initial end 111B of the film of the new reel 11B at a predetermined distance with respect to references or patterns printed on the film itself, if present. The possible excess end with respect to the clamp 20 is cut by the operator.

The new reel 11B is mounted onto the unwinding support 12, with the back D, schematised in the figure with broken lines, facing on the opposite side with respect to the back D of the reel that is running out 11A. For example, if the reel that is running out 11A has its back facing upwards, the new reel 11B is mounted with the back facing downwards, or vice versa.

The clamp 20 is temporarily rested in the relative temporary seat 32 on the sidewalls 31, 31' of the welding device 30.

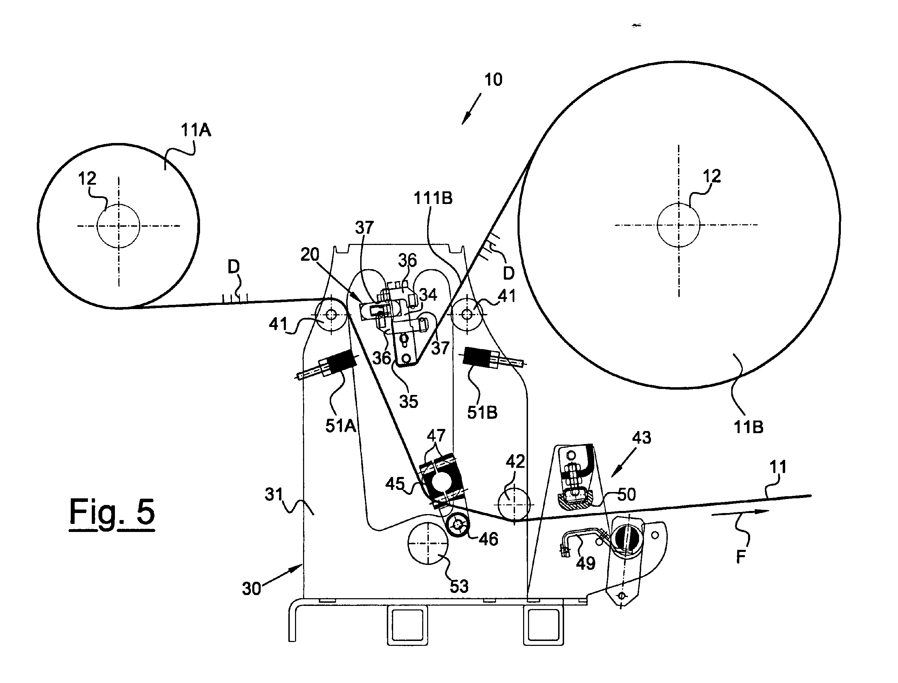

According to what has been shown in figure 5, the operator fits the clamp 20, from inside the sidewalls 31, 31', into the relative underlying opening 33, making the handle 24 come off; he turns the initial end 111B on the welding counterbar 35 and positions the clamp 20 in the seat 37 opposite the new reel 11B, that is to say facing the reel that is running out 11A.

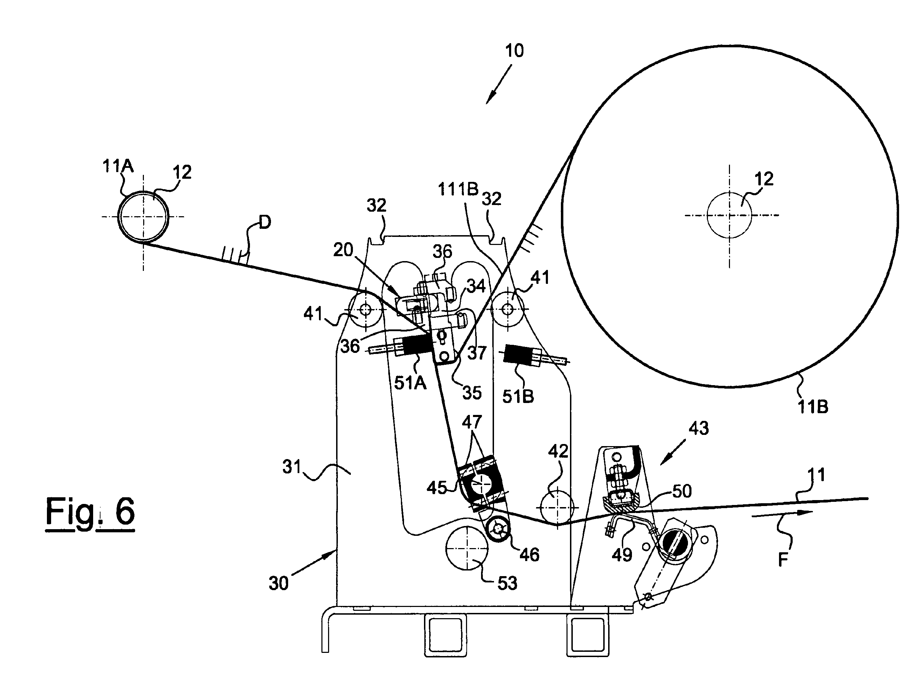

According to what has been shown in figure 6, when a sensor indicates that the reel 11A is empty, the brake 43 is actuated, the corresponding welding bar 51A is fed and pressed against the welding counterbar 35 for the side by side welding, that is to say back to back or front to front.

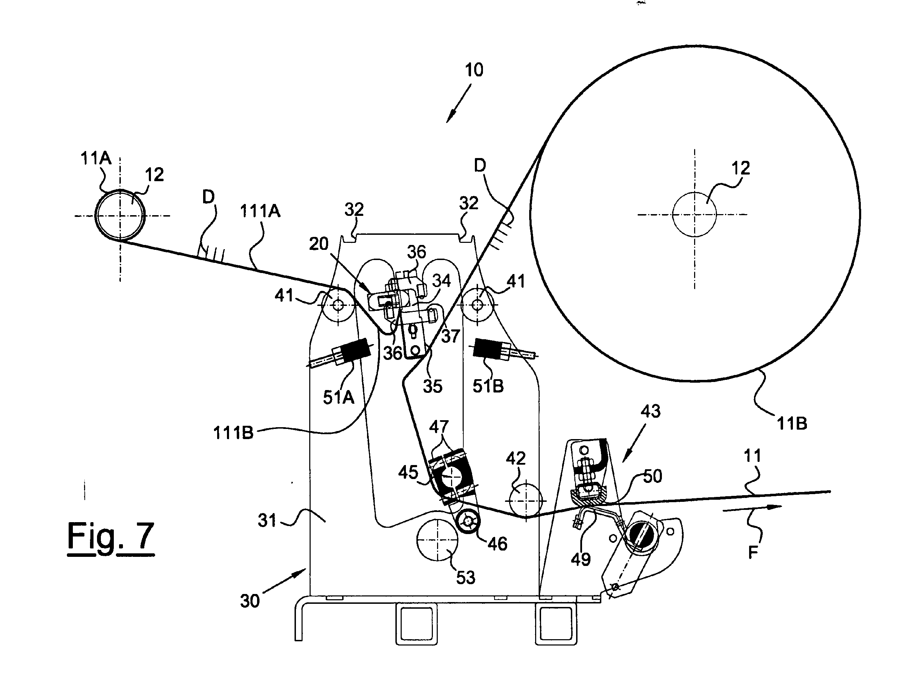

Figure 7 shows the opening of the welding bar 51A that releases the working film 11 welded to the new reel 11B and the initial end 111B of the new reel, that is integral with the clamp 20, welded to the final end 111A of the empty reel 11A.

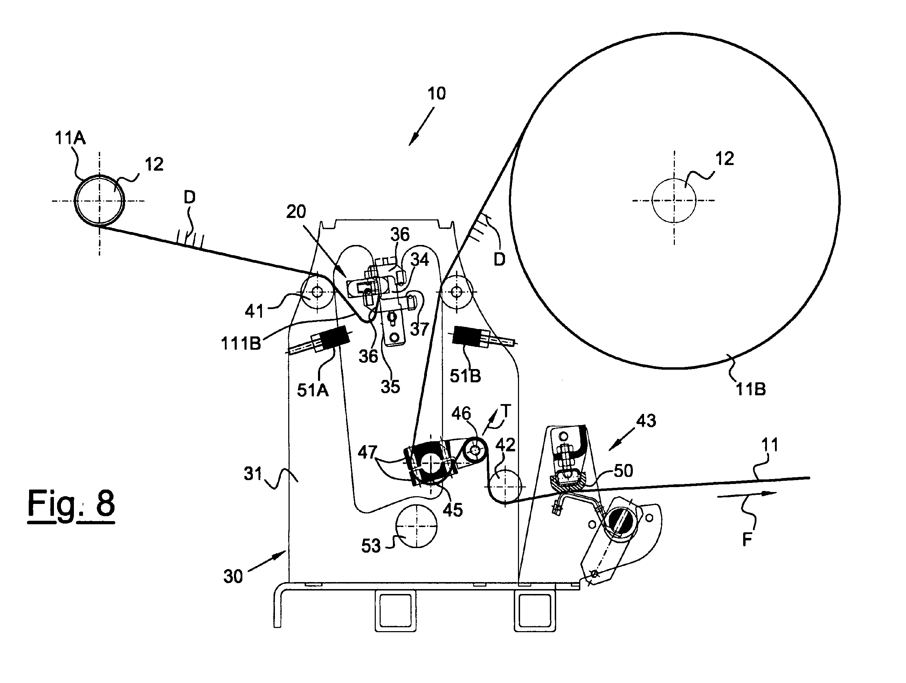

Figure 8 schematically shows a jet of air coming from the same welding bar and from the opposite welding bar which provides for cooling the film down.

The tightening means 44 of the film tighten the film 11 so as to check the quality of the welding by lifting the idler bar 46 through a piston 48, shown in figure 1 and the action of which is schematised with the arrow T, to extend the path of the working film 11 with the brake 43 still closed. If the welding is successful the piston 48 does not finish its stroke.

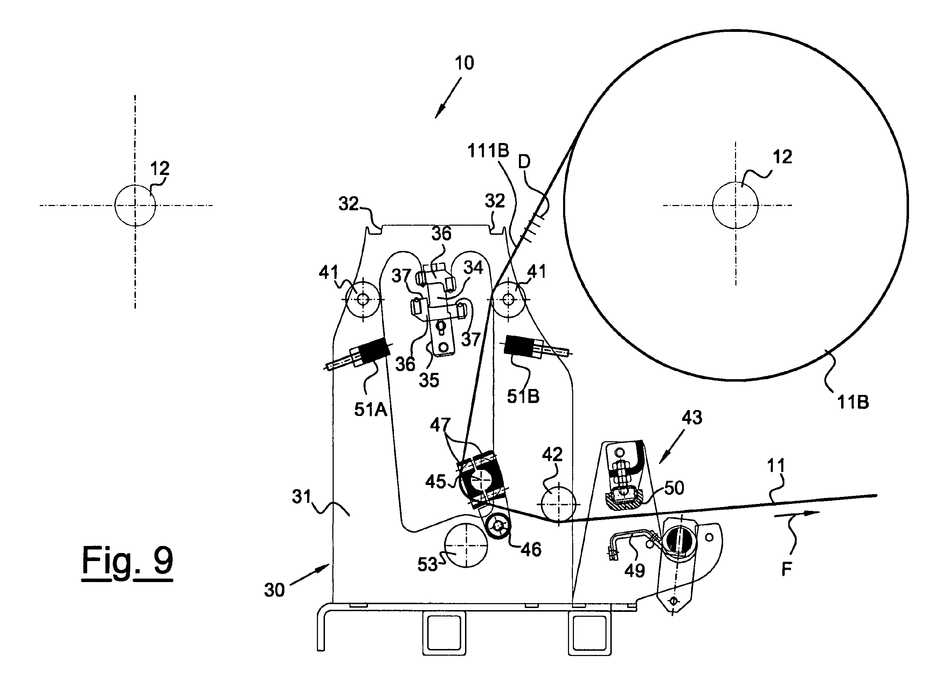

In figure 9 the brake 43 has been released, the empty reel 11A has been extracted from the unwinding support 12 and the clamp 20 has been taken off from the sidewalls 31, 31'. Once the welding has been carried out the normal feeding conditions of the film 11 are reset in direction F.

The aforementioned method of automatically welding a film for shrink packers comprises the following main steps:
- locking an initial end 111B of a new reel 11B to a free movable locking clamp 20;
- arranging the new reel 11B with the back facing onto the opposite side of a reel that is running out 11A;
- manually turning the initial end 111B of the film onto a welding counterbar 35 and positioning the clamp 20, near to the welding counterbar 35, in a seat 37 opposite with respect to the new reel 11B;
- braking the working film 11 and simultaneously welding the working film 11 to the new reel 11B side by side with each other, as well as the clamped initial end 111B of the new reel with the final end 111A of the empty reel 11A;
- checking with the machine halted the tightness of the welded film;
- releasing the brake 43, removing the clamp 20 and the empty reel 11A from the welding group 10.

The automatic welding group of a film for shrink packers and the relative method object of the present invention have the advantage of making it possible to easily mount the initial end of the new reel onto the clamp.

The positioning of the clamp on the welding group can also be advantageously carried out by the operator.

Moreover, the use of a fixed welding counterbar ensures a higher precision and repeatability of the welding.

Using a locking clamp of the film and two precise hooking positions thereof makes the system simple and cost-effective.

The automatic welding group of a film for shrink packers thus conceived can undergo numerous modifications and variants, all covered by the invention; moreover, all the details can be replaced by technically equivalent elements. In practice the materials used, as well as the sizes, can be any according to the technical requirements.

## Claims

1. Automatic welding group of a film for shrink packers comprising two unwinding supports (12), each for a reel of film (11), a locking clamp (20) of an initial end (111B) of the film of a new reel (11B) and a side by side welding device (30) of a portion of film of a reel that is running out (11A) with a portion of film of the new reel (11B), comprising two mobile welding bars (51A and 51B), **characterised in that** said welding device (30) comprises a fixed welding counterbar (35) and, above it, two opposite seats (37) for the alternative positioning of said locking clamp (20), in which said locking clamp (20) constitutes a separate and free movable element with respect to said welding device (30), said welding device (30) also comprising tightening means (44) for the welded film and a brake (43) of the film (11).

2. Welding group according to claim 1, **characterised in that** said locking clamp (20) comprises a transversal bar (21) and a matching counterbar (22) articulated with respect to each other to clamp said initial end (111B) by fastening said transversal bar (21) and said matching counterbar (22) at an end.

3. Welding group according to claim 2, **characterised in that** said locking clamp (20) comprises, at one end, a handle (24), and, at the other end, a seat (25) for the axial positioning on said welding device (30), as well as, near to said handle (24) on each of the two opposite sides of said transversal bar (21), a centring seat (26) for the alternative positioning in one of said opposite seats (37) of the welding device (30).

4. Welding group according to claim 1, **characterised in that** said welding device comprises two sidewalls (31, 31'), at least one of which is provided with an opening (33) for the positioning of said locking clamp (20) in said opposite seats (37), in which said sidewalls (31, 31') comprise, on an upper edge, at least one temporary seat (32), suitable for housing said locking clamp (20) before the positioning in one of said opposite seats (37).

5. Welding group according to claim 4, **characterised in that** said sidewalls (31, 31') are the same as one another.

6. Welding group according to claim 1, **characterised in that** said two opposite seats (37) comprise two centring supports (36), top and bottom, working together.

7. Welding group according to claim 6, **characterised in that** each of said centring supports (36) is equipped at each end with a presser (39), in which said top and bottom pressers (39) of each seat (37) are out of alignment.

8. Welding group according to claim 6, **characterised in that** it comprises, above said welding counterbar (35), axial abutment means (40) matching the end of the locking clamp (20).

9. Welding group according to claim 1, **characterised in that** said tightening means (44) comprise a idler roll (45) with fixed axis and an idler bar (46), in which said fixed axis of the roll (45) and said bar (46) are parallel to one another and joined together at the ends through connection flanges (47) to identify a channel between them for the passage of the film (11), said idler bar (46) being connected to a linear actuator (48).

10. Method for automatically welding a film for shrink packers to be used on a welding group according to any one of the previous claims, **characterised in that** it comprises the steps of:
- locking an initial end (111B) of a new reel (11B) to a free movable locking clamp (20);
- arranging said new reel (11B) with the back (D) facing onto the opposite side of the back (D) of a reel that is running out (11A);
- turning the initial end (111B) of the film onto welding counterbar (35) and positioning said clamp (20) in a seat (37) near to the welding counterbar (35), said seat (37) facing towards the reel that is running out (11A);
- braking the working film (11) and welding the working film (11) to the new reel (11B) side by side with each other, as well as welding the clamped initial end (111B) of the new reel (11B) with a final end (111A) of the empty reel (11A);
- checking the tightness of the welded film with the machine halted;
- releasing the brake (43), removing the clamp (20) and the empty reel (11A) from said welding group (10).

## Patentansprüche

1. Automatische Folienschweißgruppe für Schrumpfverpackungsmaschinen, umfassend zwei Abrollhalter (12), jeweils für eine Folienrolle (11), eine Klemmvorrichtung (20) für ein Anfangsende (111B) der Folie einer neuen Rolle (11B) und eine Vorrichtung zum Seite-an-Seite-Schweißen (30) eines Folienabschnitts einer zu Ende gehenden Rolle (11A) und eines Folienabschnitts der neuen Rolle (11B), die zwei bewegliche Schweißbalken (51A und 51B) umfasst, **dadurch gekennzeichnet, dass** die Schweißvorrichtung (30) einen festen Gegenschweißbalken (35) und darüber zwei einander gegenüberliegende Aufnahmen (37) für die alternative Positionierung der Klemmvorrichtung (20) umfasst, wobei die Klemmvorrichtung (20) ein separates und frei bewegliches Element in Bezug auf die Schweißvorrichtung (30) darstellt, wobei die Schweißvorrichtung (30) auch Spannmittel (44) für die verschweißte Folie und eine Bremse (43) für die Folie (11) umfasst.

2. Schweißgruppe nach Anspruch 1, **dadurch gekennzeichnet, dass** die Klemmvorrichtung (20) eine Querstange (21) und eine zusammenpassende Gegenstange (22) umfasst, die aneinander angelenkt sind, um das Anfangsende (111B) durch Befestigen der Querstange (21) und der zusammenpassenden Gegenstange (22) an einem Ende einzuspannen.

3. Schweißgruppe nach Anspruch 2, **dadurch gekennzeichnet, dass** die Klemmvorrichtung (20) an einem Ende einen Griff (24) und am anderen Ende eine Aufnahme (25) für die axiale Positionierung auf der Schweißvorrichtung (30) und außerdem in der Nähe des Griffs (24) auf jeder der zwei gegenüberliegenden Seiten der Querstange (21) einen Zentriersitz (26) für die alternative Positionierung in einer der einander gegenüberliegenden Aufnahmen (37) der Schweißvorrichtung (30) umfasst.

4. Schweißgruppe nach Anspruch 1, **dadurch gekennzeichnet, dass** die Schweißvorrichtung zwei Seitenwände (31, 31') umfasst, von denen mindestens eine mit einer Öffnung (33) zum Positionieren der Klemmvorrichtung (20) in den einander gegenüberliegenden Aufnahmen (37) versehen ist, wobei die Seitenwände (31, 31') auf einem oberen Rand mindestens eine Übergangsaufnahme(32) umfassen, welche die Klemmvorrichtung (20) vor dem Positionieren in einer der einander gegenüberliegenden Aufnahmen (37) aufnehmen kann.

5. Schweißgruppe nach Anspruch 4, **dadurch gekennzeichnet, dass** die Seitenwände (31, 31') einander gleich sind.

6. Schweißgruppe nach Anspruch 1, **dadurch gekennzeichnet, dass** die zwei einander gegenüberliegenden Aufnahmen (37) zwei zusammenarbeitende Zentrierlager (36), ein oberes und ein unteres, umfassen.

7. Schweißgruppe nach Anspruch 6, **dadurch gekennzeichnet, dass** jedes der Zentrierlager (36) an jedem Ende mit einem Andrücker (39) versehen ist, wobei diese oberen und unteren Andrücker (39) jeder Aufnahme (37) nicht gefluchtet sind.

8. Schweißgruppe nach Anspruch 6, **dadurch gekennzeichnet, dass** sie über dem Gegenschweißbalken (35) axiale Anschlagmittel (40) umfasst, die mit dem Ende der Klemmvorrichtung (20) zusammenpassen.

9. Schweißgruppe nach Anspruch 1, **dadurch gekennzeichnet, dass** die Spannmittel (44) eine Umlenkrolle (45) mit fester Achse und eine Umlenkstange (46) umfassen, wobei die feste Achse der Rolle (45) und die Stange (46) parallel zueinander und an den Enden durch Verbindungsflansche (47) verbunden sind, um einen Kanal zwischen ihnen für den Durchlauf der Folie (11) zu bestimmen, wobei die Umlenkstange (46) mit einem Linearaktuator (48) verbunden ist.

10. Verfahren zum automatischen Folienschweißen für Schrumpfverpackungsmaschinen für eine Schweißgruppe nach einem der vorherigen Ansprüche, **dadurch gekennzeichnet, dass** es die folgenden Schritte umfasst:
- Einspannen eines Anfangsendes (111B) einer neuen Rolle (11B) in einer frei beweglichen Klemmvorrichtung (20);
- Anordnen der neuen Rolle (11B), wobei ihre Rückseite (D) der der Rückseite (D) einer zu Ende gehenden Rolle (11A) entgegengesetzten Seite zugewandt ist;
- Wickeln des Anfangsendes (111B) der Folie auf den Gegenschweißbalken (35) und Positionieren der Klemme (20) in einer Aufnahme (37) in der Nähe des Gegenschweißbalkens (35), wobei diese Aufnahme (37) der zu Ende gehenden Rolle (11A) zugewandt ist;
- Bremsen der Arbeitsfolie (11) und Verschweißen der Arbeitsfolie (11) Seite an Seite mit der neuen Rolle (11B) und auch Verschweißen des eingespannten Anfangsendes (111B) der neuen Rolle (11B) mit einem Abschlussende (111A) der leeren Rolle (11A);
- Prüfen der Straffheit der verschweißten Folie bei angehaltener Maschine;
- Lösen der Bremse (43), Entfernen der Klemme (20) und der leeren Rolle (11A) von der Schweißgruppe (10).

## Revendications

1. Groupe de soudage automatique d'un film pour emballeuses sous film thermorétractable comprenant deux supports de déroulement (12), chacun pour une bobine de film (11), une pince de verrouillage (20) d'une extrémité initiale (111B) du film d'une nouvelle bobine (11B) et un dispositif de soudage côte-à-côte (30) d'une partie de film d'une bobine qui se termine (11A) avec une partie de film de la nouvelle bobine (11B), comprenant deux barres de soudage mobiles (51A et 51B), **caractérisé en ce que** ledit dispositif de soudage (30) comprend une contre-barre de soudage fixe (35) et, au-dessus de celle-ci, deux assises opposées (37) pour le positionnement alternatif de ladite pince de verrouillage (20), dans lequel ladite pince de verrouillage (20) constitue un élément mobile séparé et libre par rapport audit dispositif de soudage (30), ledit dispositif de soudage (30) comprenant également des moyens de serrage (44) pour le film soudé et un frein (43) du film (11).

2. Groupe de soudage selon la revendication 1, **caractérisé en ce que** ladite pince de verrouillage (20) comprend une barre transversale (21) et une contre-barre correspondante (22) articulées l'une par rapport à l'autre pour pincer ladite extrémité initiale (111B) en attachant ladite barre transversale (21) et ladite contre-barre correspondante (22) à une extrémité.

3. Groupe de soudage selon la revendication 2, **caractérisé en ce que** ladite pince de verrouillage (20) comprend, à une extrémité, une poignée (24), et, à l'autre extrémité, une assise (25) pour le positionnement axial sur ledit dispositif de soudage (30), ainsi que, près de ladite poignée (24) sur chacun des deux côtés opposés de ladite barre transversale (21), une assise de centrage (26) pour le positionnement alternatif dans l'une desdites assises opposées (37) du dispositif de soudage (30).

4. Groupe de soudage selon la revendication 1, **caractérisé en ce que** ledit dispositif de soudage comprend deux parois latérales (31, 31'), dont au moins une est pourvue d'une ouverture (33) pour le positionnement de ladite pince de verrouillage (20) dans lesdites assises opposées (37), dans lequel lesdites parois latérales (31, 31') comprennent, sur un bord supérieur, au moins une assise temporaire (32), adaptée pour loger ladite pince de verrouillage (20) avant le positionnement dans l'une desdites assises opposées (37).

5. Groupe de soudage selon la revendication 4, **caractérisé en ce que** lesdites parois latérales (31, 31') sont les mêmes.

6. Groupe de soudage selon la revendication 1, **caractérisé en ce que** lesdites deux assises opposées (37) comprennent deux supports de centrage (36), supérieur et inférieur, fonctionnant ensemble.

7. Groupe de soudage selon la revendication 6, **caractérisé en ce que** chacun desdits supports de centrage (36) est équipé à chaque extrémité d'un presseur (39), dans lequel lesdits presseurs supérieur et inférieur (39) de chaque assise (37) sont hors alignement.

8. Groupe de soudage selon la revendication 6, **caractérisé en ce qu'**il comprend, au-dessus de ladite contre-barre de soudage (35), des moyens de butée axiale (40) correspondant à l'extrémité de la pince de verrouillage (20).

9. Groupe de soudage selon la revendication 1, **caractérisé en ce que** lesdits moyens de serrage (44) comprennent un rouleau fou (45) avec axe fixe et une barre folle (46), dans lequel ledit axe fixe du rouleau (45) et ladite barre (46) sont parallèles l'un à l'autre et joints aux extrémités par le biais de brides de connexion (47) afin d'identifier un canal entre eux pour le passage du film (11), ladite barre folle (46) étant connectée à un actionneur linéaire (48).

10. Procédé pour souder automatiquement un film pour emballeuses sous film thermorétractable à utiliser sur un groupe de soudage selon une quelconque des revendications précédentes, **caractérisé en ce qu'**il comprend les étapes consistant à _{:}
- verrouiller une extrémité initiale (111B) d'une nouvelle bobine (11B) à une pince de verrouillage mobile libre (20) ;
- disposer ladite nouvelle bobine (11B) avec le dos (D) orienté sur le côté opposé du dos (D) d'une bobine qui se termine (11A) ;
- tourner l'extrémité initiale (111B) du film sur la contre-barre de soudage (35) et positionner ladite pince (20) dans une assise (37) près de la contre-barre de soudage (35), ladite assise (37) étant orientée vers la bobine qui se termine (11A) ;
- freiner le film en cours de fonctionnement (11) et souder le film en cours de fonctionnement (11) à la nouvelle bobine (11B) côte-à-côte l'un à l'autre, ainsi que souder l'extrémité initiale pincée (111B) de la nouvelle bobine (11B) avec une extrémité finale (111A) de la bobine vide (11A) ;
- vérifier le serrage du film soudé avec la machine arrêtée ;
- relâcher le frein (43), retirer la pince (20) et la bobine vide (11A) dudit groupe de soudage (10).
